# EUROPEAN PATENT APPLICATION

(11) **EP 3 854 502 A1**
(43) Date of publication of application: **28.07.2021**
(21) Application number: 20153373.4
(22) Date of filing: 23.01.2020
(51) Int. Cl.: B22F 1/00, B22F 1/02, C01B 32/15, C01B 32/182, C01B 32/194, C01B 32/198, C08K 3/04, C22C 1/05, C22C 1/10, C22C 26/00

(54) **A COMPOSITE AND METHOD OF PREPARATION THEREOF**

(71) Applicant: ABB Schweiz AG, 5400 Baden (CH)
(72) Inventor: Manninen, Jorma, 00380 Helsinki (FI); Silvennoinen, Mika, 00380 Helsinki (FI); Pakarinen, Joni, 00980 Helsinki (FI)
(74) Representative: Kolster Oy Ab

(57) **Abstract**

The present invention relates to a composite and a method of its preparation. The composite comprises particles of a metal or a metal alloy; and particles of graphene. In said composite and method at least one particle of metal or metal alloy is coated with at least one particle of graphene.

## Description

### FIELD OF THE INVENTION

The present invention relates to a composite comprising particles of a metal or a metal alloy; and particles of graphene.

The present invention further relates to a method of preparing a composite according to the invention.

The present invention further relates to a composite as obtainable by the method according to the invention.

The present invention further relates to a thermal management member comprising a composite body made from the composite according to the invention.

### BACKGROUND OF THE INVENTION

Power electronic (PE) modules' heat loss is dissipated mainly via its about three millimeter (3 mm) thick copper base plate that serves as package internal heat spreader (copper thermal conductivity, k ∼ 380 W/mK). The base plate must be in good thermal connection with a cooling device like air-cooled heat sink, liquid cold plate or thermosyphon heat sink. Thermal characteristics of the cooling device must be designed according to both the PE module thermal characteristics and its targeted usage profile.

High speed motor drive has increased PE heat losses because of higher switching frequency. Then high-power cyclic applications have higher thermal induced stresses within the PE module. Conventional aluminium heat sinks' thermal characteristics are well known and utilized quite well too. However, the increasing heating power density (W/cm2) of PE modules requires more efficient cooling solutions. Also, the common aluminium heat sinks' time constants are insufficient (too long) for the high-power cyclic applications. Much faster response is needed to avoid excessive junction temperatures and to achieve long service life.

The common heat sink design problem relates to insufficient base plate heat spreading but especially insufficient cooling fin efficiency. Aluminium alloys are attractive as material for cooling solutions as they are relatively inexpensive and easy to manufacture (soft), but its thermal conductivity (k∼200 W/mK) is often insufficient.

Typically heat sink's aluminium base plate thickness is over 12 mm to withstand IGBT module tightening torque and to spread high heat loss (1000 W - 3000 W) to cooling fins. Again, typically aluminium cooling fins thickness is 1mm or more to enable sufficient cooling fin heat transfer rate. In this case copper fins and/or base plate inserts are commonly considered because of their higher thermal conductivity, but these would increase complexity, cost, and total weight significantly.

Specific heat sink designs have been developed to both reduce thermal resistance and enhance their power cycle response. These heat sink improvements relate e.g. to special cooling fin designs for enhanced surface area and/or enhanced heat transfer coefficient, combination of different construction materials (e.g. Al and Cu) and use of two-phase construction parts like heat-pipes and vapour chambers for increased heat spreading within the heat sink. Especially the two-phase heat sinks are proven to work well in many thermally demanding applications.

Heat sinks can be manufactured from various materials, but aluminium alloys and copper are the most common. Manufacturing technologies are numerous, and they are combined too. Some common technologies are extrusion profiles, extrusion lamella-packs, stamped heat sinks, die casted heat sinks, skived fin heat sinks, folded fin heat sink, milled/machined heat sinks, crimped fin heat sink, bonded fin heat sinks (glued), brazed fin heat sinks (soldered), forged heat sinks, aluminium heat sinks with copper insert in the baseplate, and heat pipe heat sinks.

There are various designs of heat pipe heat sinks, which e.g. include heat pipes gun-drilled into aluminium heat sink baseplate, heat pipes embedded in the aluminium heat sink baseplate surface, and U-shape heat pipes extending from an aluminium heat sink baseplate into the heat sink's cooling fins.

In addition to above mentioned heat sink designs the aluminium material has been modified in order to achieve higher thermal conductivity. This has been done with e.g. diamond powder that has increased the aluminium alloys' thermal conductivity higher than 500 W/mK, and even up to 700 W/mK. However, the diamond filler particles are highly abrasive and as a result the aluminium-diamond material is difficult to process, and the processing tools wear out easier than with typical aluminium alloys.

Carbon has been added to metals like steel in common blast furnace process in which carbon is released form coke (produced from coal mineral). The method described in this invention is clearly different from the furnace process.

One problem in prior art is that novel IGBT modules' heat losses are higher than previously and their heat fluxes (W/cm2) are increasing too. This sets challenges to:
A) conventional cooling technologies like air cooled heat sinks which thermal resistance and impedance are limited.
B) The IGBT module package construction is conventional and evolves very slowly. In many standard packages the 3 mm thick copper base plate serves as main heat spreader even the rated power has doubled. This has led to situation that some IGBT modules cannot achieve their full performance with conventional air-cooling, but their cooling may cost more than the IGBT module itself.
C) Cooling system designs based on conventional materials like aluminium and copper require relatively large material thickness for heat transfer. This means that systems become big in size, heavy weight, and complicate and expensive.
D) Electric cables and busbars based on conventional materials like aluminium or copper require relatively large material thickness (cross-section area) for current transfer, current losses, and high operating temperatures.

Applications of the new IGBTs include e.g. high speed and high power cyclic and high efficiency drive products. For these applications for example extruded aluminium and aluminium lamella-pack heat sinks may not be applicable, and solutions are looked form liquid cooling cold-plates and thermosyphon heat sinks.

### BRIEF DESCRIPTION [DISCLOSURE] OF THE INVENTION

It is an object of the present invention to provide a composite and a method of its' preparation so as to solve the above problems. The objects of the invention are achieved by a composite and a method which are characterized by what is stated in the independent claims. The preferred embodiments of the invention are disclosed in the dependent claims.

The composite according to the invention comprises
- particles of a metal or a metal alloy; and
- particles of graphene; and
is characterised in that at least one particle of the metal or metal alloy is coated with at least one particle of graphene.

In one preferred embodiment of the composite of the invention, at least 20%, preferably 50 to 100% of the metal or metal alloy particles are coated with at least one particle of graphene. Preferably, the surface of the metal or metal alloy particles are coated with particles of graphene to a degree of at least 10%, preferably at least 50 to 100% of the surface area.

The metal or metal alloy particles of the composite of the invention preferably have a rounded or spheroidal shape.

The graphene particles of the composite of the invention are preferably synthetic graphene particles in the form of flakes. Graphene particles may also be processed from mining materials like natural graphite.

It is preferable that the particle size of the metal or metal alloy is in the range of 1000 nm to 100 µm, preferably 10-90 µm, more preferably 30-75 µm.

It is preferable that the particle size of the graphene is from 0.1-50 µm.

In a preferable embodiment of the composite according to the invention graphene is graphene, graphene oxide (GO) or reduced graphene oxide (RGO). The metal of the composite of the invention is preferably aluminium (Al), or copper (Cu). If a metal alloy is used in the composite, it is preferably steel, an aluminium alloy, or a copper alloy.

In one preferable embodiment of the composite of the invention the graphene is provided as ten or less parallel layers thick, preferably as a mono-, double or triple layer, most preferably as a monolayer. Most preferably the graphene is provided as a graphene oxide monolayer, preferably having a carbon content of at least 95% and an oxygen content of 2.5% or less.

The method of the invention for preparing a composite, said composite comprising:
- particles of a metal or a metal alloy; and
- particles of graphene;
is characterised in that at least one particle of the metal or metal alloy is coated with at least one particle of graphene.

In a preferable embodiment of the method according to the invention, at least 20%, preferably 50 to 100% of the metal or metal alloy particles are coated with at least one particle of graphene. Preferably, the surface of the metal or metal alloy particles are coated with particles of graphene to a degree of at least 10 %, preferably at least 50 to 100% of the surface area.

In a preferable embodiment of the method according to the invention, the coating is performed by mixing particles of the metal or of the metal alloy with particles of graphene.

In a preferred embodiment of the method the metal particles have a rounded or spheroidal shape. In a preferred embodiment of the method the graphene particles are synthetic graphene particles in the form of flakes.

It is further preferable that the particle size (diameter) of the metal or metal alloy is in the range of 1-100 µm, preferably 10-90 µm, more preferably 30-75 µm.

The flakes of graphene preferably have a flake size from 10 nm to 50 µm, preferably from 0.1-5 µm, most preferably from 1-5 µm, and a flake thickness of 0.8-1.2 nm.

In a certain preferable embodiment the graphene used is selected from graphene, graphene oxide or reduced graphene oxide. The metal is preferably aluminium (Al) or copper (Cu). In case of using a metal alloy in the method, the metal alloy is steel or an aluminium-based alloy.

In the method of the invention the graphene is preferably provided as ten or less parallel layers, preferably as a mono-, di- or trilayer, most preferably as a monolayer. The graphene is preferably provided as a graphene oxide monolayer, preferably having a carbon content of at least 95% and an oxygen content of 2.5% or less. The graphene particles and the particles of the metal or the metal alloy are both preferably provided in powder form, respectively.

In a more specific preferred embodiment of the method of the invention
(a) the graphene particles in the form of a powder are dispersed in a solvent or mixture of solvents to obtain a homogenous dispersion;
(b) the particles of the metal or metal alloy in powder form are mixed with the homogenous dispersion of graphene and the resulting mixture is stirred to obtain a slurry;
(c) the solvent or mixture of solvents is removed from the slurry; and
(d) the mixture resulting in step (c) is sintered to obtain a solid mass of composite by using heat.

It is particularly preferable that the solvent is selected from dimethyl sulfoxide (DMSO) or dimethyl formamide (DMF).

In an even more preferred embodiment of the method of the invention the sintering step (d) is performed at a temperature of at least 400°C in an atmosphere of an inert gas, preferably in an atmosphere of nitrogen (N₂) or argon (Ar), at a pressure of at least 1 MPa. The sintering step (d) may alternatively be performed in a hydrogen gas (H₂) atmosphere.

In another specific preferred embodiment of the method of the invention, the method comprises:
(a) mixing the graphene particles in powder form with the particles of the metal or the metal alloy in powder form; and
(b) sintering the powder mixture resulting in step (a) using both high temperature and high pressure.

It is preferable in the abovementioned preferred embedment that the temperature and pressure in step (b) are chosen so as to not cause the metal to melt. It is also preferable that the sintering step (b) is performed in an inert atmosphere of argon (Ar) or nitrogen (N₂). The sintering step (b) may alternatively be performed in a hydrogen gas (H2) atmosphere.

In the present composite and method of the invention a part of the metal or metal alloy particles me be uncoated i.e. not coated with graphene. This indicates that in at least some circumstances some "free" graphene remains amongst the coated and possible uncoated metal or metal alloy particles. The intention is to minimise the amount of uncoated metal or metal alloy particles in the composite of the invention. The intention is also to minimise the amount of free graphene particles in the composite of the invention.

As a result of the sintering step the particles of metal or metal alloy, and particles of graphene may be compressed and/or flattened to at least some degree.

The invention also relates to a composite obtainable by the method according to the invention.

The invention further relates to a thermal management member comprising a composite body made from the composite according to the invention.

The application of this invention is for example a heat sink or it's parts like a base plate or a cooling fin used to cool high power electronic component such as but not limited to 'EconoDual' IGBT module.

Another application is an electronics component's metallic construction part like an IGBT module base plate that is made of aluminium or copper typically.

Another application is an electronic equipment enclosure and its' construction parts that are made of steel or aluminium typically.

Further applications of the composite material of the invention are electric cables and busbars that are made of aluminium or copper typically.

Benefits of the novel composite according to the invention are:
- Various metal composites with graphene oxide (GO) and reduced graphene (RGO) can be produced in this manner.
- Referring to the earlier mentioned problems, increased thermal conductivity of e.g. aluminium alloy can be achieved depending on the graphene oxide content (V/V%) - even k∼500 W/mK could be achieved with Al. This clearly exceeds the typical thermal conductivity of aluminium and copper (150% and 30%, respectively).
- increased thermal conductivity without weight increase.
- the graphene enriched metals like aluminium and copper and steel could achieve higher hardness and mechanical strength too. However, the benefits will reduce when graphene concentration exceeds a base metal alloy specific limit value (about 4 v/v% for aluminium). Conventional aluminium's mechanical strength reduces with increasing thermal conductivity.
- reduced Coefficient of Linear Expansion (CTE) that is beneficial in many applications e.g. in electronics packaging where it allows larger design freedom in minimizing temperature driven mechanical stresses related to the construction materials' CTE mismatch.
- the novel material features 'dry lubrication' i.e. lower surface friction compared to baseline material even with very small GO contents (well below 1v/v%). This feature is valuable for various applications ranging from gearboxes, bearings, cutting tools, conveyors, extrusion tools just to name few.
- electrical conductivity of GO enriched metal alloy is expected to increase. Though magnitude of this depends on baseline metal and GO content.
- the better thermal conductivity benefits in many applications like heat sink, liquid cooling cold plate, IGBT module heat spreading in base plate, electronic enclosure heat spreading and dissipation etc. These can perform better, or they can be designed thinner and lighter that saves material and environment.
- the synthetic graphene oxide powder is relatively low-cost material that can be produced in volumes. This makes it attractive material for novel metal alloy production.

Expected other benefits of the new metal composition compared to baseline metal: increased thermal conductivity, electrical conductivity improves, hardness and mechanical strength increases, and reduced friction coefficient. Further, the cross-section area of cable or busbar could be smaller, lighter and cheaper. Alternatively, with the same cross-section area as in a cable or a busbar made from conventional material, the composite material of the invention would enable would be possible to obtain an increased current carrying capacity, reduced losses, and lower operating temperature. This would also reduce the costs of the cable or busbar.

Considered applications are electronic component package parts like baseplate, heat spreader, lids; cooling elements like heat sinks, cold plates, and their parts; electronic enclosure parts; electric equipment parts like axial fan housings; and electric current conductors like busbar and wires.

### BRIEF DESCRIPTION OF THE DRAWINGS

In the following the invention will be described in greater detail by means of preferred embodiments with reference to the attached drawing, in which

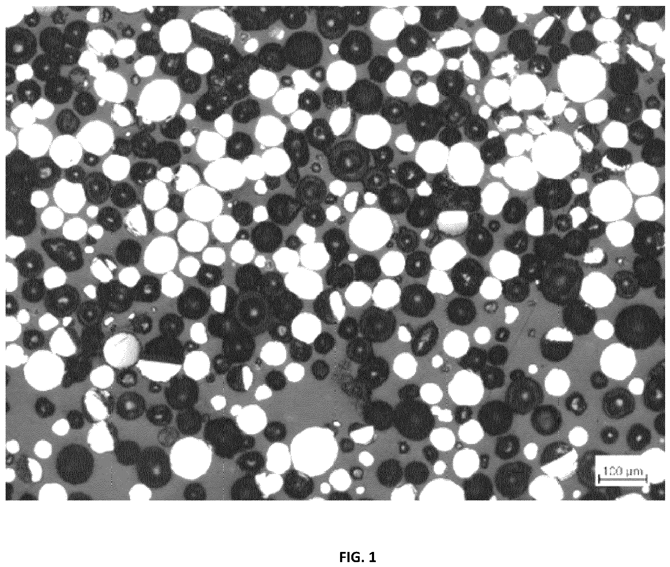

Fig. 1 presents a scanning electron microscope (SEM) image of copper particles coated with graphene oxide according to the method of the invention.

### DETAILED DESCRIPTION OF THE INVENTION

In this application the term "metal alloy" is interchangeably used with the term "alloy" and shall mean a mixture of two or more elements, whereof at least one is a metal. This metal is sometimes referred to as the primary metal or the base metal of the alloy. The other elements may be either metallic or non-metallic elements. Examples of metals useable as metals in alloys are aluminium (Al), copper (Cu), iron (Fe), tin (Sn), silver (Ag), indium (In), lead (Pb), gallium (Ga), zinc (Zn), calcium (Ca), barium (Ba), titanium (Ti), magnesium (Mg), bismuth (Bi), manganese (Mn), zirconium (Zr), and tellurium (Te). Examples of non-metallic elements used in alloys include carbon and silicon. For example, steel is an alloy of elemental iron and non-metallic carbon, whereas silicon steel is an alloy of elemental iron and non-metallic silicon.

In this application the term "composite" is interchangeably used with the term "composite material" and shall have the meaning of a material made from two or more different constituent materials.

In this application the term "graphene" shall have the meaning of one or more, but not more than ten (10) graphene layers, wherein each single monolayer of graphene is a two-dimensional (i.e. one atom thick) planar sheet of sp²-bonded carbon atoms densely packed in a hexagonal (honeycomb shaped) crystal lattice. In the case of graphene having two or more graphene layers, the layers are stacked parallel to each other in a three-dimensional order.

There are three main ways to synthesize graphene, they are: Chemical Vapor Deposition (CVD), chemical or plasma exfoliation from natural graphite, and mechanical cleavage from natural graphite. Lately high-volume and low-cost production processes, like molecular cracking and welding (MCW) method, for few-layer graphene materials have been introduced.

In this application the term "graphene oxide", abbreviated as "GO", also referred to as graphite/graphitic oxide, shall have the meaning of a compound of carbon, oxygen, and hydrogen in variable ratios, as obtained by treating graphite with oxidisers. The term "graphene oxide" may also be referred to as "single layer GO".

In this application the term "reduced graphene oxide", abbreviated as "RGO", means a form of graphene oxide that has had oxygen-containing groups removed, either by chemical or thermal reduction thereof, in order to make the flakes more similar (in terms of properties) to pure graphene. GO has a wide range of different oxygen functional groups present: 1,2-epoxide and alcohol groups on the basal planes, and carboxyl and ketone groups at the edges. These different oxygen functional groups may upon reduction be removed to different degrees depending on the reduction degree. RGO is also sometimes referred to as functionalised graphene.

In this application the term "sintering" may be understood as including or consisting of compacting a powder mixture of particles of a metal or a metal alloy and particles of graphene. Compacting of the powder mixture may be performed as cold or hot compacting. Cold compacting may be performed by pressing, isostatic pressing, rolling, extrusion, or injection molding. Hot compacting is performed as hot isostatic pressing.

This invention provides an easy, straight forward and relatively low-cost method for combining graphene with e.g. aluminium and copper alloys. The novel method is based on mixing the elements in powder form first and combining them by using both high temperature and high pressure (e.g. Hot Isostatic Pressing (HIP) process). Each if the powders of said elements are most preferably dry.

It is preferred to use synthetic graphene oxide (GO) or reduced graphene oxide (RGO) powder, since it has been found to adhere well to the metal powder particle's surface during mixing. The mixing results in graphene (GO or RGO) coated metal powder that can be processed further into a solid object.

The graphene coated metal powder is packed into a depressurized (vacuumed) and sealed stainless steel capsule. Then the capsule is heated up to a metal alloy specific temperature ranging from 400°C to 1500°C (about 500°C for Al, and about 850°C for Cu), it is subjected to very high (200 MPa) isostatic pressure and cooled rapidly to room temperature. The HIP process parameters (temperature, pressure, and time) are all precisely controlled to achieve the desired material properties. The HIP process compacts the material inside the capsule and results in a novel solid composite material.

The resulting novel composite materials of the invention comprising either aluminium or copper as the metal (base metal in alloys) and GO as graphene have beneficial characters like higher thermal conductivity, lighter weight (lower density), and/or lower surface dry friction. The composite comprising copper and GO is beneficial for machines (bearings, gears, etc.) and tools.

Synthetic GO or RGO powder is extremely high thermally conductive, light weight, and lubricative by nature. Thus e.g. the novel aluminium-GO composite would benefit many applications like conventional heat sinks where both the heat sink base plate spreading and cooling fin efficiency improves. This results in clearly lower heat sink thermal resistance (Rth) and better cooling of the heat dissipating components.

Weight of a heat sink made of the novel material is also lower than equivalent typical aluminium heat sink. This is because novel material is stronger than baseline material that allows thinner structures. In addition, the novel aluminium material with graphene fillers is faster to heat up to desired forming temperature, it is easier to form, and extrusion tools' service life is longer (less wear). This innovation enables design of both mechanically strong and thermally high performing aluminium composites.

The metal powder particle shape is preferably spherical or rounded or sub-rounded but also different shape metal particles can be used (angular, sub-angular, flakey, cylindrical, cubic etc.).

### Example 1

In this example of preparing a composite comprising copper and graphene, pure copper, commercially available from Oerlikon Metco under the product name Metco 55 (www.oerlikon.com) was used. This copper product (Metco 55) is a dry, unoxidized and essentially pure (Cu-content is 99.0% or more) copper thermal spray powder available in the form of an inert thermal spray powder). The Metco 55 copper is an inert gas atomized copper powder. The copper powder particles have a spheroidal morphology. The apparent density of this copper powder is 3.0-4.0 g/cm³ and its' melting point is 1083°C (1981°F). The nominal particle size distribution of the Metco 55 copper particles is between 38 µm and 90 µm (-90+38).

Dry graphene oxide (GO) powder, commercially available from Ossila (www.ossila.com) under the trade name M881 was used. The characteristics of the graphene oxide powder M881 are given in table 1 below.

**Table 1. Characteristics of Ossila's graphene oxide powder M881.**

| **Characteristic** | **Graphene Oxide (M881)** |
|---|---|
| Flake size | 1-5 µm |
| Flake thickness | 0.8-1.2 nm |
| Single layer ratio | >99% |
| Purity | >99% |
| Amount | 500 mg, 1g |
| Packaging information | Light resistant bottle |

The copper powder and monolayer graphene oxide flakes (copper 99.5% by weight and GO 0.5% by weight per total weight of the obtained mixture) are mixed mechanically in protective inert gas atmosphere of nitrogen. During this process the graphene oxide flakes are believed to adhere to the copper particles' surface.

Then the copper-GO mixture (GO coated metal powder) is encapsulated by packing it into a stainless-steel capsule, depressurized (vacuumed), and sealed hermetically by e.g. welding.

The capsule containing the copper-GO powder mixture is a Hot Isostatic Pressing (HIP) furnace wherein the GO coated copper powder is heated up to a temperature from about 830°C to 870°C at a pressure of about 200 MPa for about 1-3 h. After this the material is cooled rapidly to room temperature. The HIP process results in a compacted solid piece of the GO-coated copper that has a quite uniformly distributed graphene oxide content.

### Example 2

In an alternative procedure for copper powder coating with graphene oxide, the same copper powder and monolayer graphene oxide powder (flakes) as used in Example 1 are mixed/stirred in the liquid solvent isopropyl alcohol (IPA). After stirring the solvent is removed e.g. by heating (above + 81°C for IPA) and GO coated copper powder is produced. The amounts of the copper powder and monolayer graphene oxide powder used are 99.5% and 0.5% by weight, respectively, per total dry weight of the two powders).

This procedure consists of the following steps:
(1) Dispersing the GO powder in the solvent dimethyl sulfoxide (DMSO) to obtain a homogenous (dark brown) dispersion.
(2) Mixing the copper powder with the GO dispersion and stirring it to form a homogenous mixture (slurry).
(3) Removing the solvent (DMSO) from the mixture by evaporation (slight heat, vacuum) to get GO and copper adhered and dispersed uniformly.
(4) Reducing the GO-content in the novel copper-GO-composite: Preferable amount of uncoated copper powder is mixed into already coated copper powder.
(5) Encapsulate the coated copper powder by sintering it at 1000 °C for 3h in high-pressure (50 MPa) N₂ atmosphere.
(6) Step (7) results in a compacted composite body where the graphene and metal powders get bonded.
(7) Scanning electron microscope (SEM) images unveil that the copper particles are coated with graphene. The SEM images are presented in Fig. 1.

The SEM image in Fig. 1 shows that not all copper particles were coated with GO. The white particles in Fig.1 are uncoated copper particles, whereas the black particles are copper particles (completely) coated with GO. There are also particles that are partially white and partially black. These particles are copper particles only partially coated with GO.

It will be obvious to a person skilled in the art that, as the technology advances, the inventive concept can be implemented in various ways. The invention and its embodiments are not limited to the examples described above but may vary within the scope of the claims.

## Claims

1. A composite comprising:
- particles of a metal or a metal alloy; and
- particles of graphene;
**characterised in that** at least one particle of the metal or metal alloy is coated with at least one particle of graphene.

2. A composite according to claim 1, wherein
at least 20%, preferably 50 to 100 % of the metal or metal alloy particles are coated with at least one particle of graphene; and/or
the surface of the metal or metal alloy particles are coated with particles of graphene to a degree of at least 10%, preferably at least 50 to 100% of the surface area.

3. A composite according to claim 1 or 2, wherein
the metal particles have a rounded or spheroidal shape; and/or
the graphene particles are synthetic graphene particles in the form of flakes.

4. A composite according to anyone of claims 1 to 3, wherein
the particle size of the metal or metal alloy is in the range of 1-100 µm, preferably 10-90 µm, more preferably 30-75 µm; and/or
the particle size of the graphene is from 0.1-50 µm.

5. A composite according to any one of claims 1 to 4, wherein
graphene is graphene, graphene oxide (GO) or reduced graphene oxide (RGO);
the metal is aluminium (Al), or copper (Cu); and/or
the metal alloy is steel, a copper alloy or an aluminium alloy.

6. A composite according to any one of claims 1 to 5, wherein the graphene is provided as ten or less parallel layers thick, preferably as a mono-, double or triple layer, most preferably as a monolayer.

7. A composite according to any one of claims 1 to 6, wherein the graphene is provided as a graphene oxide monolayer, preferably having a carbon content of at least 95% and an oxygen content of 2.5% or less.

8. A method of preparing a composite, said composite comprising:
- particles of a metal or a metal alloy; and
- particles of graphene;
**characterised in that** at least one particle of the metal or metal alloy is coated with at least one particle of graphene.

9. A method according to claim 8, wherein
at least 20%, preferably 50 to 100% of the metal or metal alloy particles are coated with at least one particle of graphene; and/or
the surface of the metal or metal alloy particles are coated with particles of graphene to a degree of at least 10%, preferably at least 50 to 100% of the surface area.

10. A method according to claim 8 or 9, wherein the coating is performed by mixing particles of the metal or of the metal alloy with particles of graphene.

11. A method according to any one of claims 8 to 10, wherein
the metal particles have a rounded or spheroidal shape; and/or
the graphene particles are synthetic graphene particles in the form of flakes.

12. A method according to any one of claims 8 to 11, wherein
the particle size (diameter) of the metal or metal alloy is in the range of 1-100 µm, preferably 10-90 µm, more preferably 30-75 µm; and/or
the flakes of graphene have a flake size from 100 nm to 50 µm, preferably from 1 to 5 µm, most preferably from 1 to 5 µm, and a flake thickness of 0.8 to 1.2 nm.

13. A method according to any one of claims 8 to 12, wherein graphene used is selected from graphene, graphene oxide or reduced graphene oxide, the metal is aluminium (Al) or copper (Cu); and/or the metal alloy is steel, or a copper or aluminium alloy.

14. A method according to any one of claims 8 to 13, wherein the graphene is provided as ten or less parallel layers, preferably as a mono-, di- or trilayer, most preferably as a monolayer.

15. A method according to any one of claims 8 to 14, wherein the graphene is provided as a graphene oxide monolayer, preferably having a carbon content of at least 95% and an oxygen content of 2.5% or less.

16. A method according to any one of claims 8 to 15, wherein the graphene particles and the particles of the metal or the metal alloy are both provided in powder form, respectively.

17. A method according to any one of claims 8 to 16, wherein
(a) the graphene particles in the form of a powder are dispersed in a solvent or mixture of solvents to obtain a homogenous dispersion;
(b) the particles of the metal or metal alloy in powder form are mixed with the homogenous dispersion of graphene and the resulting mixture is stirred to obtain a slurry;
(c) the solvent or mixture of solvents is removed from the slurry; and
(d) the mixture resulting in step (c) is sintered to obtain a solid mass of composite by using heat.

18. A method according to claim 17, wherein the solvent is selected from dimethyl sulfoxide (DMSO) or dimethyl formamide (DMF).

19. A method according to claim 17 or 18, wherein the sintering step (d) is performed at a temperature of at least 400°C in an atmosphere of an inert gas such as nitrogen (N₂) or argon (Ar), or in an atmosphere of hydrogen gas (Hz), at a pressure of at least 1 MPa.

20. A method according to any one of claims 8 to 16, the method comprising:
(a) mixing the graphene particles in powder form with the particles of the metal or the metal alloy in powder form; and
(b) sintering the powder mixture resulting in step (a) using both high temperature and high pressure.

21. A method according to claim 20, wherein the temperature and pressure in step (b) are chosen so as to not cause the metal to melt.

22. A method according to claim 20 or 21, wherein the sintering step (b) is performed in an inert atmosphere of argon (Ar) or nitrogen (N₂), or an atmosphere of hydrogen gas (H₂).

23. A composite obtainable by the method according to anyone of the claims 8 to 22.

24. A thermal management member comprising a composite body made from the composite according to any one of the claims 1 to 7 or a composite according to claim 23.
